# EUROPEAN PATENT APPLICATION

(11) **EP 2 492 794 A2**
(43) Date of publication of application: **29.08.2012**
(21) Application number: 12153507.4
(22) Date of filing: 01.02.2012
(51) Int. Cl.: G06F 3/12

(54) **Multiple print protocol capability of a virtual printer in a print shop architecture**

(30) Priority: 23.02.2011 US 201113032871
(71) Applicant: Ricoh Company, Ltd., Tokyo 143-8555 (JP)
(72) Inventor: Gaertner, Joseph, Boulder CO 80301-9270 (US); Jahn, Janeen, Boulder CO 80301-9270 (US); Kadiyala, Kumar, Boulder CO 80301-9270 (US); Shoning, Allida, Boulder CO 80301-9270 (US); Waller, Marquis, Boulder CO 80301-9270 (US)
(74) Representative: Maury, Richard Philip

(57) **Abstract**

The systems and methods presented herein provide for seamless printer accessibility to clients regardless of the print protocols being used in their respective print jobs. A printing system includes a physical printer and a print process device operable to process a print job from a client system. The print processing device includes a virtual printer operable to detect a print protocol associated with the print job, determine that the print protocol associated with the print job conflicts with the print capabilities of the physical printer, configure the print job with the print protocol of the physical printer based on the print protocol associated with the print job, and process the print job according to the print protocol of the physical printer. In doing so, a protocol converter may map printer commands of the print protocol of the print job to printer commands of the print protocol of the printer.

## Description

### Field of the Invention

The invention relates to processing print jobs though a print shop architecture.

### Background

Larger enterprises often employ fairly complex print shop architectures to address their various printing needs. For example, members of an organization may use local printers for simple desktop publishing (e.g., letters, memorandums, pictures, etc.). However, when the organization requires more sophisticated and/or larger volume printing, the organization may employ a print shop architecture comprising a number of higher-end printers (e.g., multifunction printers, production printing systems, etc.) that are capable of providing more functionality and/or print volume.

These print shop architectures are typically managed by a print server that is operable to receive print jobs from a plurality of clients via host system devices (e.g., networked computer systems, mobile devices, etc.). The seamless integration of the printers in such an environment, however, is often difficult to implement. For example, printers and their specific capabilities may not be fully recognized by individual client devices. The print server is configured to manage the hardware and software assets of all the printers in the print shop architecture such that a user can easily identify a particular printer. In this centralized print environment, system administrators and other information technology personnel can also access and control the features of the printers.

Typically, the print server is configured with a plurality of features and protocols of the various printers controlled by the print server. For example, each printer managed by the print server may have its own print capabilities (e.g., double-sided printing, stapling, collation, etc.) and/or print protocols (Hot Folder, Job Definition Format or "JDF", Job Messaging Format or "JMF", line printer or "LPR"), that differ from other printers in the print shop architecture. Before such centralized management, a client device would install a printer driver that included the printing capabilities of the printer. The printer driver also establishes the print protocol for the client device to communicate with and control the printer. The print server maintains the printer drivers for the physical printer.

The print server presents this functionality to the client device such that a user may print a document to a particular physical printer. A problem, however, exists when a user wishes to print on a particular physical printer and a user configured print job does not employ the same protocol as that of the desired physical printer. The user, therefore, may be forced to select another printer in the print shop architecture that is less desirable.

### Summary

Embodiments herein provide seamless printer accessibility to clients regardless of the print protocols being used in their respective print jobs (e.g., Hot Folder, LPR, JMF, JDF, etc.). In one embodiment, a printing system includes a print process device that is operable to interface between a client system and a physical printer. The print process device is further operable to receive a print job from the client system and process the print job for printing via the physical printer. The print process device includes a printer object communicatively coupled to the physical printer. The printer object comprises print capabilities of the physical printer. The print capabilities of the physical printer are accessible via a print protocol of the physical printer. The printing system also includes a virtual printer communicatively coupled to the printer object and the client system. The virtual printer is operable to detect a print protocol associated with the print job, determine that the print protocol associated with the print job conflicts with the print protocol of the physical printer, and process the print job according to the print protocol of the physical printer. To implement such, the virtual printer may include a protocol converter that is operable to convert printer commands of the print protocol of the print job to printer commands of the print protocol of the physical printer.

In one embodiment, the virtual printer is also operable to present the print capabilities of the printer to the client system based on the print protocol of the print job. For example, the virtual printer may access print capabilities of a physical printer using the print protocol of that physical printer and convey those print capabilities to the client via a different print protocol (i.e., the print protocols being used by the client).

In another embodiment, the printing system includes a graphical user interface operable to interface with the virtual printer to reconfigure the virtual printer print protocols with fewer or more print protocols. For example, the print protocols of the virtual printer may be changed in a variety of ways to accommodate various printing needs of the clients. In another embodiment, the virtual printer is further operable to locate another physical printer based on the detected print protocol associated with the print job and transfer the print job to the other physical printer via the print protocol of the print job. For example, the detected print protocol may be compatible with another physical printer associate with the printing system. Accordingly, the virtual printer may locate that printer and transfer the print job from the client to the printer for printing in a manner that is seamless to the client.

The various embodiments disclosed herein may be implemented in a variety of ways as a matter of design choice. For example, the embodiments may take the form of computer hardware, software, firmware, or combinations thereof. In one embodiment, a method is operable within the printing system to perform the functionality of the virtual printer. In another embodiment, a computer readable medium is operable to store software instructions that are operable to implement the various steps of the method. Other exemplary embodiments may be described below.

### Description of the Drawings

Some embodiments of the present invention are now described, by way of example only, and with reference to the accompanying drawings. The same reference number represents the same element or the same type of element on all drawings.
FIG. 1 is a block diagram of a print shop architecture in an exemplary embodiment.
FIG. 2 is a block diagram of a virtual printer in a print server of the print shop architecture in an exemplary embodiment.
FIG. 3 is a flow chart of a method for processing print jobs through the virtual printer in an exemplary embodiment.

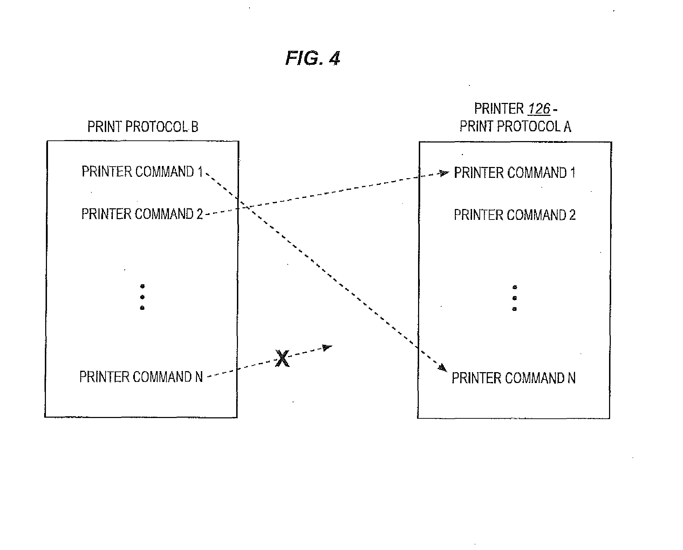

FIG. 4 illustrates mapping of protocol commands in an exemplary embodiment.
FIG. 5 is another block diagram of the virtual printer in the print server of the print shop architecture in an exemplary embodiment.
FIG. 6 illustrates an exemplary computer system operable to execute computer readable medium embodying programmed instructions to perform desired functions.

### Description of Embodiments

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

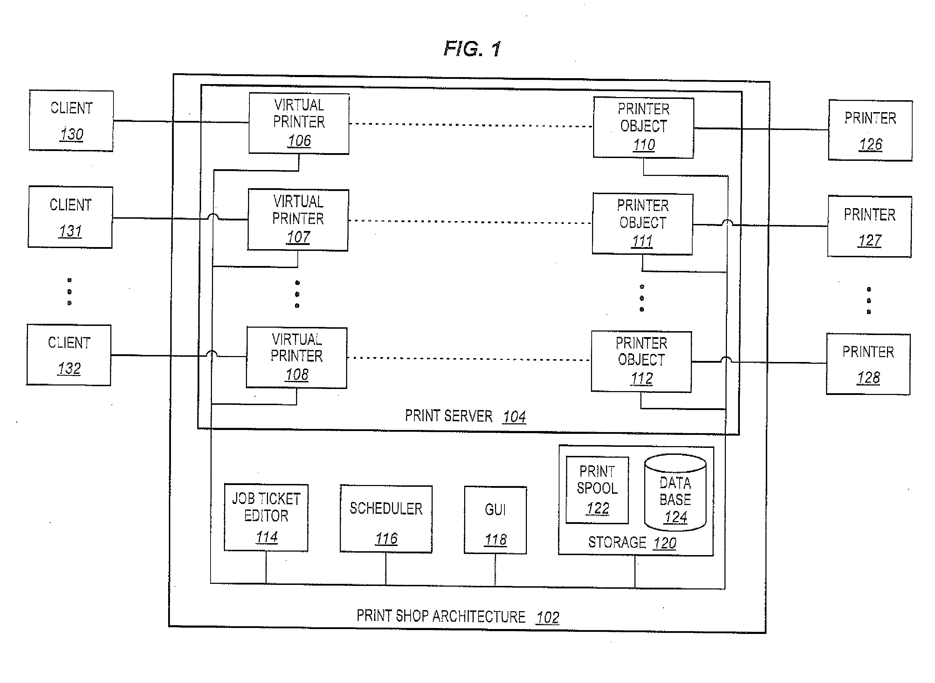

FIG. 1 is a block diagram illustrating a print shop architecture 102 (also referred to herein as a printing system) in an exemplary embodiment. The print shop architecture 102 couples one or more clients 130 - 132 to one or more physical printers 126 - 128 to provide printing and print workflow services to the clients 130 - 132. The print shop architecture 102 is operable to receive print jobs and job tickets from the clients 130 - 132 for printing via printers 126 - 128. The clients 130 - 132 may include banks, credit card companies, or other entities that generate print jobs (e.g., monthly bank statements, monthly credit card bills, etc.) on host computer systems via software applications that interface with the print shop architecture 102. The print shop architecture 102 may receive the print jobs from the clients 130 - 132 in a number of different formats, such as Portable Document Format (PDF), Mixed Object: Document Content Architecture (MO:DCA), Advanced Function Printing (AFP), etc. Job tickets may be received from the clients 130 - 132 in a number of different formats, such as Job Definition Format (JDF), Print Production Format (PPF), Portable Job Ticket Format (PJTF), etc. A job ticket comprises print parameters that define how a print job is to be printed on the printers 126 - 128. The printers 126 - 128 generally include systems for transforming print data of the print jobs onto a suitable printable medium, such as paper, and generally are large production printing systems for high volume printing.

The print shop architecture 102 includes a print server 104 (also referred to herein as a print process device) having one or more virtual printers 106 - 108. The virtual printers 106 - 108 are generally software modules that are operable within the print server 104 to communicate with the clients 130 - 132 and provide an interface to the clients 130 - 132 that allows the clients 130 - 132 to set up print jobs and send the print jobs (and job tickets associated with the print jobs) to the printers 126 - 128. The print shop architecture 102 also includes a corresponding plurality of printer objects 110 - 112. The printer objects 110 - 112 are similar to printer drivers in that the printer objects 110 - 112 comprise print capabilities of corresponding printers 126 - 128. The printer objects 110 - 112 also include system capabilities of the print shop architecture 102 (i.e., delayed printing features, expedited printing features, periodic printing features, etc.). Accordingly, each printer object generally includes all of the printing capabilities of a printer and establishes the communications and control for that printer. Typically, a 1:1:1 correspondence exists between the virtual printers, the printer objects, and the printers. That is, a virtual printer typically interfaces to one printer object and that printer object comprises the printing capabilities of one printer.

When the clients 130 - 132 send print jobs and job tickets to the print shop architecture 102, the job tickets are copied into a database 124 located in storage 120 ofthe print shop architecture 102. The print jobs and job tickets are then placed in a print spool 122 of storage 120 as open print jobs prior to queuing the print jobs for printing. A scheduler 116 identifies the open print jobs located in the print spool 122 and attempts to schedule the print jobs in queues of the printer objects 110 - 112. Typically, the scheduler 116 attempts to schedule the open print jobs with one of the printer objects 110 - 112 corresponding to the virtual printer that received the print job. For example, if the client 130 transmitted the print job to the virtual printer 106, then the scheduler 116 may first attempt to place the print job in a print queue of the print server object 110. Generally, the printer objects 110 - 112 interface with corresponding printers 126 - 128 to queue and process print jobs prior to transmitting the print jobs to the printers 126 - 128.

A print operator may use a Graphical User Interface (GUI) of the print shop architecture 102 to control and identify the status of print jobs in the print shop architecture 102. For example, the GUI 118 may provide a list of print jobs in queues of the printer objects 110 - 112 and other general information about the status of open jobs in the print spool 122. The print operator may also use a job ticket editor 114 to modify job tickets associated with both open and queued print jobs. Using job the ticket editor 114, the print operator may modify job tickets to change various print options for a print job associated with the job ticket, such as duplexing, stapling, media type, etc. The print shop architecture 102 provides a number of printing and workflow services to the clients 130 - 132 which will become more readily apparent through the following discussion and related figures.

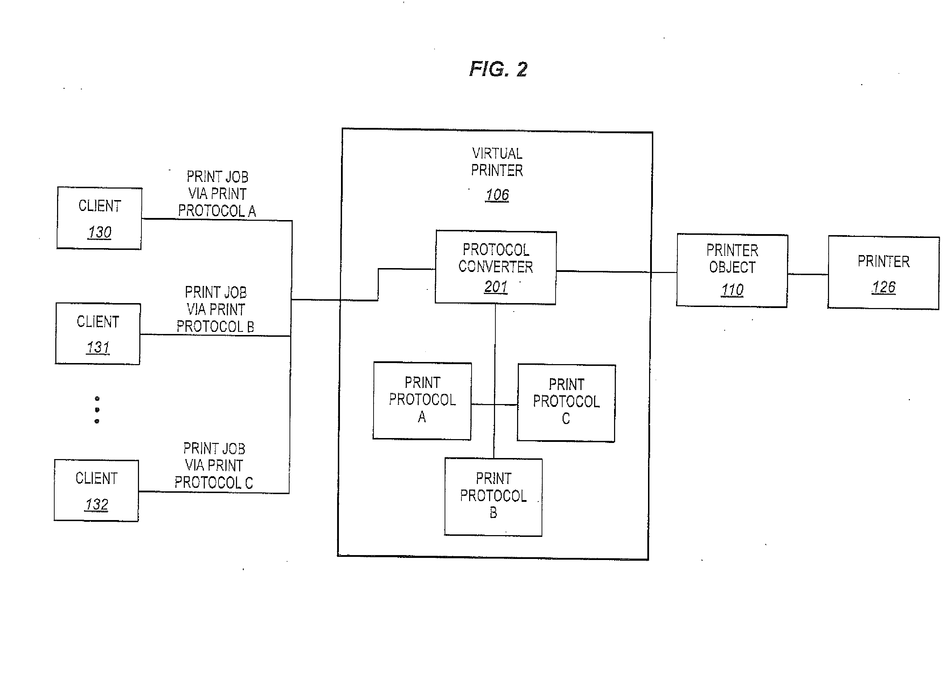

Although shown are described with respect to a particular number of clients, virtual printers, printers, and printer objects, the invention is not intended to be so limited. The print server 104 may be operable to provide printing services to more or fewer clients and/or include more or fewer printers than shown in the exemplary embodiment. Moreover, each virtual printer may be operable to provide an interface to printing services for more than one client. An example of such is shown in FIG. 2.

FIG. 2 is a block diagram of the virtual printer 106 in the print server 104 in an exemplary embodiment. In this embodiment, the clients 130 - 132 are communicatively coupled to the virtual printer 106 to access printing services of the printer 126. Each of the clients 130 - 132 configures print jobs with a particular print protocol and transfers them to the virtual printer 106 for printing via the printer 126. More specifically, this embodiment illustrates each of the clients 130 - 132 transferring their respective print jobs using different print protocols A, B, and C (designated as such for simplicity). The printer 126, however, is operable to process print jobs via print protocol A (i.e., via the virtual printer 106 and the printer object 110). The virtual printer 106 includes a protocol converter 201 that is operable to process print jobs employing print protocols that differ from that of the printer 126 and prepare them for printing via the printer 126. Examples of various print protocols include HotFolder, LPR, JMF, and JDF.

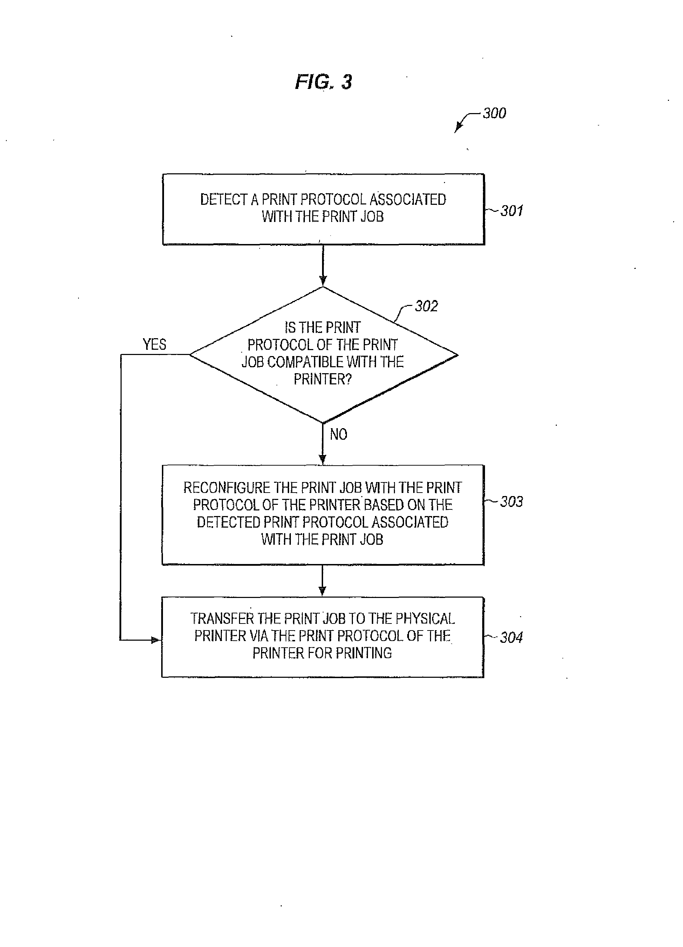

Hot Folder provides a relatively quick way of sending image files to the printers 126 - 128. The Hot Folder interface displays the printers 126 - 128 to the clients 130 - 132 through user created "hot folders" that serve as drop-off points for images where printing is desired. LPR is a well-known network protocol for submitting print jobs to a remote printer. JDF is an extensible XML-based protocol built upon existing technologies of the International Cooperation for the Integration of Processes in Prepress, Press, and Postpress Organization (CIP4) Print Production Format and the Adobe Portable Job Ticket Format. JDF provides the ability to unify print aspects of print jobs and bridge communication between printers and management functionality, regardless of the tools being used. JDF works in tandem with a counterpart format, JMF. JMF provides for production components of a JDF workflow to communicate management functionality. JMF provides a series of queries and commands to elicit information about JDF print jobs and determine system capabilities of the print server 104 and/or printer capabilities ofthe printers 126 - 128. The functionality of the print shop architecture 102, and more specifically of the virtual printer 106, will now be discussed with reference to the method 300 of FIG. 3.

The method 300 initiates when the virtual printer 106 receives aprintjob from one of the clients 130 - 132. As the clients 130 - 132 may transfer the print jobs to the virtual printer 106 via print protocols that are inoperable with the printer 126, the virtual printer 106 detects the print protocol associated with the print job, in the process element 301. For example, the client 131 may transfer a print job to the virtual printer 106 via print protocol B for printing via the printer 126. As print protocol B is inoperable/incompatible with the printer 126, the virtual printer 106 may determine such in the process element 302. The virtual printer 106 may then reconfigure the print job with the print protocol of the printer 126 (i.e., print protocol A), in the process element 303, and transfer the print job to the printer 126 via print protocol A, in the process element 304. If, however, the client 130 transfers a print job to the virtual printer 106 that is compatible with the printer 126 (e.g., the client 130 transfers the print job via print protocol A), the virtual printer 106 may simply transfer the print job to the printer 126 via the printer object 110 for printing.

As briefly mentioned, the virtual printer 106 may be configured with the protocol converter 201 to reconfigure the print job from print protocol B to the printer protocol A. The protocol converter 201 is operable to map printer commands of print protocol B to printer commands of print protocol A of the printer 126. In this regard, the print job is reconfigured with the print protocol of the printer 126 based on the print protocol of the print job. An example of such mapping is shown and described in FIG. 3.

FIG. 3 illustrates the mapping of print protocol B to print protocol A (i.e., print protocol mapping from print job to printer 126). Generally, each print protocol such as those described above, includes printer commands that are operable to direct a physical printer to perform in a particular manner. For example, printer commands may direct the printer to print a certain number of pages, print in N-up formatting, collate print j obs, staple print jobs, end stitch print jobs, print black and white, print on a particular paper size, print to a particular print tray (e.g., a color paper tray), etc. Other printer commands may control system level properties/capabilities of the print shop architecture 102 (e.g., delayed printing, periodic printing, expedited printing, etc.).

While not all print protocols have the same number of printer commands and necessarily provide the same functionality, certain printer commands are generally common among print protocols (e.g., number of pages, number of copies, paper size, etc.). In this regard, once the protocol converter 201 determines that the print protocol of a received print job is incompatible with the printer 126, the protocol converter 201 may access the printer commands within print protocol B and map them to similar printer commands within print protocol A of the printer 126. For example, the printer command 1 of print protocol B may perform essentially the same functionality as the printer command N of print protocol A (e.g., print a user defined number of copies of the print job). Accordingly, the protocol converter 201 may assign the functionality of the printer command 1 in print protocol B of the received print job to the functionality of the printer command N in print protocol A. Thus, any values within the printer command 1 of print protocol B of the received print job are transferred to the printer command N of print protocol A of the printer 126.

Since print protocols may not have the same numbers and types of printer commands as other print protocols, certain printer commands may not map properly. For example, printer command N of print protocol B has no direct mapping to a printer command within print protocol A the printer 126. In such a case, the protocol converter 201 may simply ignore the functionality and/or values of that particular command. In the opposite case where the printer command of print protocol A does not properly map to a printer command of print protocol B, the protocol converter 201 may assign some default value (e.g., a no value or some other value that is commonly desired in print jobs) to ensure that processing of the print job moves forward.

Alternatively or additionally, the virtual printer 106 may itself be reconfigured to process fewer or more print protocols. For example, the GUI 118 may allow a system administrator to access the virtual printer 106 and change the types of print protocols that are processed by the virtual printer 106. The virtual printer 106 may also be configured to present the print capabilities of a particular printer to a client. For example, the client 133 may query the print capabilities of the printer 126 (and possibly the system capabilities of the print shop architecture 102) via print protocol C. The virtual printer 106, providing an interface to the client 132, may access the capabilities of the printer 126 via print protocol A and transfer those capabilities to the client 132 via print protocol C. Thus, the mapping by the protocol converter 201 may be a bidirectional mapping so as to provide two-way communications between printers and clients.

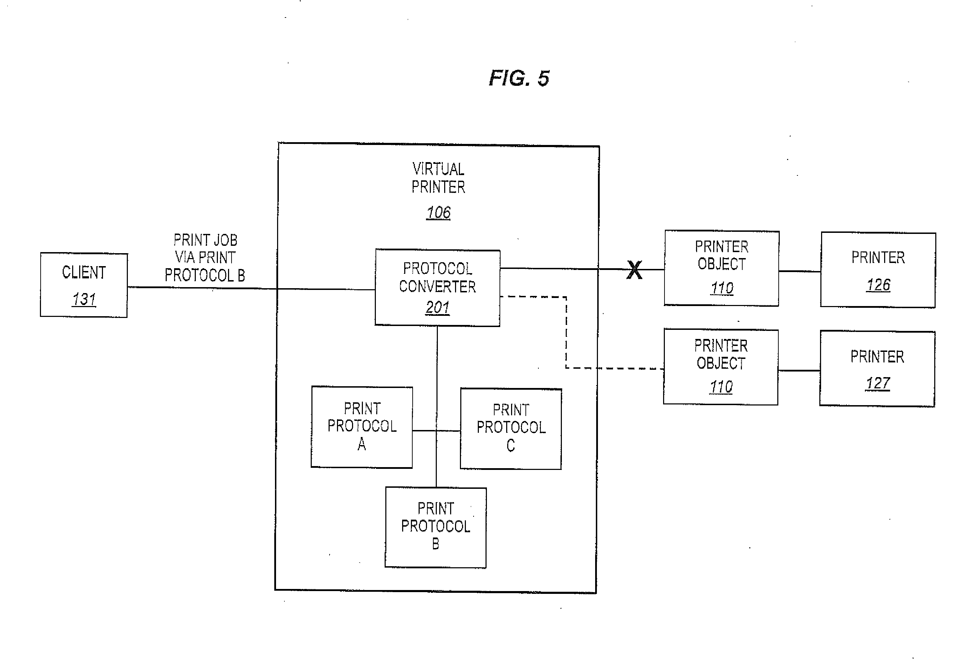

In an alternative embodiment, the virtual printer 106 may not reconfigure the print protocol of a received print job. Instead, the virtual printer 106 may detect the print protocol of the received print job and locate a compatible printer to transfer the print job as is to the printer. For example, assuming that the printer 126 is operable to process print jobs using print protocol A and that the printer 127 is operable to process print jobs using print protocol B, the virtual printer 106 may transfer a print job from the client 131 via print protocol B to the printer 127 for printing. Accordingly, the virtual printer 106 may detect the print protocol of the received print job and communicatively couple it to the compatible printer 127 (i.e., via the printer object 111). An example of such a shown in FIG. 5.

The N designation of the printer commands within print protocols A and B is merely intended to designate an integer greater than 1. As mentioned, each print protocol is typically different and employs a different number of printer commands. Accordingly, the invention is not intended be limited to any particular number of printer commands. Nor should the invention be limited to any number or type of print protocols that may be acceptable to the virtual printer 106.

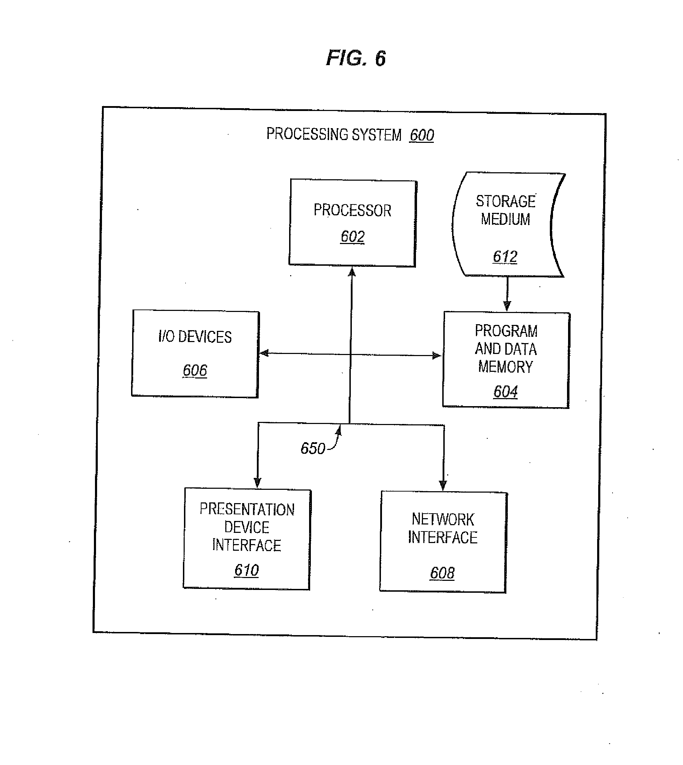

As mentioned, embodiments disclosed herein can take the form of software, hardware, firmware, or various combinations thereof. FIG. 6 is a block diagram depicting a processing system 600 also operable to provide the above features by executing programmed instructions and accessing data stored on a computer readable storage medium 612. In this regard, embodiments of the invention can take the form of a computer program accessible via the computer-readable medium 612 providing program code for use by a computer or any other instruction execution system. For the purposes of this description, the computer readable storage medium 612 can be anything that can contain, store, communicate, or transport the program for use by the computer.

The computer readable storage medium 612 can be an electronic, magnetic, optical, electromagnetic, infrared, or semiconductor device. Examples of the computer readable storage medium 612 include a solid state memory, a magnetic tape, a removable computer diskette, a random access memory (RAM), a read-only memory (ROM), a rigid magnetic disk, and an optical disk. Current examples of optical disks include compact disk - read only memory (CD-ROM), compact disk - read/write (CD-R/W), and DVD.

A processing system 600, being suitable for storing and/or executing the program code, includes at least one processor 602 coupled to memory elements 604 through a system bus 650. The memory elements 604 can include local memory employed during actual execution of the program code, bulk storage, and cache memories that provide temporary storage of at least some program code and/or data in order to reduce the number of times the code and/or data are retrieved from bulk storage during execution.

Input/output or I/O devices 606 (including but not limited to keyboards, displays, pointing devices, etc) can be coupled to the system either directly or through intervening I/O controllers. Network adapter interfaces 608 may also be coupled to the system to enable computer system 600 to become coupled to other data processing systems or storage devices through intervening private or public networks. Modems, cable modems, IBM Channel attachments, SCSI, Fibre Channel, and Ethernet cards are just a few of the currently available types of network or host interface adapters. A presentation device interface 610 may be coupled to the system to interface to one or more presentation devices, such as printing systems and displays for presentation of presentation data generated by processor 602.

Although shown and described with respect to automated processing of print job documents, such designations are merely intended to describe the general printing, sorting, and/or inserting of the documents. Accordingly, while specific embodiments are described herein, the scope of the invention is not limited to those specific embodiments. The scope of the invention is defined by the following claims and any equivalents thereof.

## Claims

1. A printing system, comprising:
a print process device operable to interface between a client system and a physical printer, to receive a print job from the client system, and to process the print job for printing via the physical printer,
wherein the print process device comprises:
a printer object communicatively coupled to the physical printer and comprising print capabilities of the physical printer that are accessible via a print protocol of the physical printer;
a virtual printer communicatively coupled to the printer object and the client system and operable to detect a print protocol associated with the print job, to determine that the print protocol associated with the print job conflicts with the print protocol of the physical printer, and to process the print job according to the print protocol of the physical printer.

2. The printing system of claim 1, wherein the virtual printer comprises a protocol converter operable to map printer commands of the print protocol of the print job to printer commands of the print protocol of the physical printer for processing the print job according to the print protocol of the physical printer.

3. The printing system of claim 1, wherein the virtual printer is further operable to present the print capabilities of the physical printer to the client system based on the print protocol of the print job.

4. The printing system of claim 1, wherein the print protocol of the print job is Hot Folder, Line Printer (LPR), Job Messaging Format (JMF), or Job Definition Format (JDF).

5. The printing system of claim 1, further comprising a graphical user interface operable to interface with the virtual printer to reconfigure the virtual printer with additional print protocols.

6. The printing system of claim 1, wherein the virtual printer is configured with a plurality of print protocols, and
wherein the printing system further comprises a graphical user interface operable to interface with the virtual printer to reconfigure the virtual printer with fewer print protocols.

7. The printing system of claim 1,
wherein the virtual printer is further operable to locate another physical printer based on the detected print protocol associated with the print job and to transfer the print job to the other physical printer via the print protocol of the print job, and
wherein the detected print protocol is compatible with the other physical printer.

8. A method of processing a print job from a client system through a virtual printer in a printing system, the method comprising:
detecting a print protocol associated with the print job to determine a print protocol type;
determining that the detected print protocol of the print job conflicts with a print protocol of a physical printer of the printing system;
reconfiguring the print job with the print protocol of the physical printer based on the detected print protocol of the print job; and
transferring the print job to the physical printer via the print protocol of the physical printer for printing.

9. The method of claim 8, further comprising mapping printer commands of the print protocol of the print job to printer commands of the print protocol of the physical printer to reconfigure the print job with the print protocol of the physical printer.

10. The method of claim 8, further comprising:
accessing print capabilities of the physical printer via the print protocol of the physical printer; and
presenting the print capabilities of the physical printer to the client system via the detected print protocol of the print job.

11. The method of claim 8, wherein the print protocol of the print job is Hot Folder, Line Printer (LPR), Job Messaging Format (JMF), or Job Definition Format (JDF).

12. The method of claim 8, further comprising reconfiguring the virtual printer to increase print protocol flexibility through a graphical user interface.

13. The method of claim 8, further comprising:
detecting another print protocol associated with another print job;
determining that the other print protocol of the other print job conflicts with the print protocol of the physical printer;
locating another physical printer based on the other print protocol; and
transferring the other print job to the other physical printer via the other print protocol.

14. A computer readable medium comprising software instructions that, when executed on a processor, are operable to direct the processor to process a print job from a client system through a virtual printer in a printing system, the software instructions being further operable to direct the processor to:
detect a print protocol associated with the print job;
determine that the detected print protocol of the print job conflicts with a print protocol of a physical printer;
reconfigure the print job with the print protocol of the physical printer based on the detected print protocol of the print job; and
transfer the print job to the physical printer via the print protocol of the physical printer for printing.

15. The computer readable medium of claim 14, wherein the software instructions are further operable to:
direct the processor to map printer commands of the print protocol of the print job to printer commands of the print protocol ofthe physical printer to reconfigure the print job with the print protocol of the physical printer.
